(19) Europäisches Patentamt
European Patent Office
Office européen des brevets

(11) **EP 3 816 004 B1**

(12) **EUROPEAN PATENT SPECIFICATION**

(45) Date of publication and mention
of the grant of the patent:
**19.07.2023   Bulletin 2023/29**

(21) Application number: **19875143.0**

(22) Date of filing: **28.06.2019**

(51) International Patent Classification (IPC):
**B60W 40/107** (2012.01)      **B60W 40/109** (2012.01)

(52) Cooperative Patent Classification (CPC):
**B60W 50/14; B60R 21/015; B62D 41/00;**
B60K 2370/176; B60W 2030/082; B60W 2050/001;
B60W 2050/002; B60W 2050/143; B60W 2050/146;
B60W 2420/42; B60W 2420/54; B60W 2520/105;
B60W 2520/125; B60W 2540/215; B60W 2554/801;

(Cont.)

(86) International application number:
**PCT/CN2019/093438**

(87) International publication number:
**WO 2020/082778 (30.04.2020 Gazette 2020/18)**

(54) **VEHICLE COLLISION DETECTION METHOD AND VEHICLE CONTROL SYSTEM**

FAHRZEUGKOLLISIONSERKENNUNGSVERFAHREN UND FAHRZEUGSTEUERUNGSSYSTEM

PROCÉDÉ DE DÉTECTION DE COLLISION DE VÉHICULE ET SYSTÈME DE COMMANDE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2018   CN 201811256531**

(43) Date of publication of application:
**05.05.2021   Bulletin 2021/18**

(73) Proprietors:
• **Guangzhou Chengxing Zhidong Motors
Technology Co., Ltd.
Guangzhou, Guangdong 510700 (CN)**
• **Guangzhou Xiaopeng Motors Technology Co.,
Ltd.
Tianhe District
Guangzhou
Guangdong (CN)**

(72) Inventors:
• **HUANG, Ya
Guangzhou, Guangdong 510000 (CN)**
• **LIU, Zhongyuan
Guangzhou, Guangdong 510000 (CN)**
• **LI, Hongjun
Guangzhou, Guangdong 510000 (CN)**

(74) Representative: **Ran, Handong
Maucher Jenkins
Seventh Floor Offices
Artillery House
11-19 Artillery Row
London SW1P 1RT (GB)**

(56) References cited:
CN-A- 102 967 728      CN-A- 106 965 808
CN-A- 108 428 343      CN-A- 109 278 757
JP-A- 2010 173 367      JP-B2- 6 027 743
KR-B1- 101 544 421      US-A1- 2007 088 488

(52) Cooperative Patent Classification (CPC): (Cont.)
B60W 2554/802

## Description

## TECHNICAL FIELD

The invention relates to the field of vehicle technologies, and more particularly, to a vehicle collision detection method and a vehicle control system.

## BACKGROUND

At present, some cars can automatically detect collision accidents and perform corresponding control operations (such as popping out airbags) after detecting collision accidents. Conventional collision detection methods generally utilize angular velocities and accelerations of the vehicle in a three-dimensional space detected by an Inertial Measurement Unit (IMU) of the vehicle. However, it has been found in practice that, a driver's active emergency braking (i.e., sudden braking) is easily misjudged as a collision accident happens in the conventional collision detection methods.

US2007/088488A1 discloses a vehicle safety system. In which, a camera can be activated for recording in response to detecting an object within a first defined distance (warning zone) of a vehicle, so as to provide potentially invaluable data for accident investigation. Moreover, various vehicle sensor signals from sensors including as a lateral acceleration sensor and a g-force (bump/impact) sensor may be received and processed by a processing unit of the vehicle safety system as a basis for its vehicular event detection.

KR101544421B1 discloses an apparatus for controlling a vehicle black box using an impact sensor. Specifically, the apparatus extracts event information on the basis of an impact signal supplied from the impact sensor installed at a position of a vehicle, and sets a focus distance of a camera lens on the basis of an image view angle which is previously defined in correspondence to the extracted event information, and adjusts a lens on the basis of the focus distance of the camera lens. The event information is constituted by the impact signal collected by the impact sensor during a preset period, and the variation of the impact signal is greater than or equal to a preset threshold. The impact signal is generated by placing an impact signal generated by a vehicle body into a three-dimensional coordinate system containing X, Y and Z axes.

## SUMMARY

Embodiments of the invention provide a vehicle collision detection method and a vehicle control system, which can reduce misjudgments and improve the accuracy of vehicle collision detection. The invention is set out in the appended set of claims.

Compared with the related art, the invention has the following beneficial effects:
First of all, conventional vehicle collision detection method usually takes a sudden change of acceleration as a collision accident happens to the vehicle. A sudden braking is an active deceleration behavior of the vehicle, such a sudden deceleration behavior also causes a sudden change of acceleration, so the sudden braking is easily misjudged as a collision accident. In the invention, the relative distance between the vehicle and the obstacle is detected, and after determining that the relative distance is less than the distance threshold, then the vehicle is detected, according to obtained acceleration information, whether a collision accident happens. Specifically, the invention determines whether a collision accident happens to the vehicle by judging the variance of the acceleration of the vehicle in a horizontal direction (i.e., the longitudinal and lateral directions). That is, when the relative distance between the vehicle and the obstacle is too close (a collision maybe happen), the acceleration of the vehicle is obtained for collision detection, and the variance of the acceleration component is used to determine whether there is a sudden change in acceleration, thereby excluding the misjudgment caused by the sudden acceleration detected when the vehicle is relatively far from the obstacle. It can be seen that the invention can reduce misjudgments and improve the accuracy of vehicle collision detection.

## BRIEF DESCRIPTION OF THE DRAWINGS

In order to more clearly illustrate the technical solutions in the embodiments of the invention, the drawings used in the description of the embodiments are briefly described below. It is obvious that the drawings in the following description only illustrate some embodiments of the invention. Other drawings can also be obtained from those skilled in the art based on these drawings without creative efforts.

FIG. 1 is a schematic flowchart of a vehicle collision detection method according to an example useful for understanding the invention but outside the scope of the invention as claimed.
FIG. 2 is a schematic flowchart of vehicle collision detection method according to another embodiment of the invention.
FIG. 3 is a schematic flowchart of vehicle collision detection method according to still another embodiment of the invention.
FIG. 4 is a schematic block diagram of a vehicle control system according to an example useful for understanding the invention but outside the scope of the invention as claimed.
FIG. 5 is a schematic block diagram of vehicle control system according to another embodiment of the invention.
FIG. 6 is a schematic block diagram of vehicle control system according to still another embodiment of the invention.
FIG. 7 is a schematic block diagram of vehicle control system disclosed according to yet another embodiment of the invention.

## DETAILED DESCRIPTION OF PREFERRED EMBODIMENTS

Technical solutions of the invention will be described in a clear and comprehensive manner in conjunction with the accompanying drawings.

It should be noted that the terms "include", "comprise", "have" and any variations thereof are intended to cover non-exclusive inclusion. For example, a process, a method, a system, a product, or an apparatus that includes a series of steps or units, is not limited to the listed steps or units, but optionally may also include other steps or other units not listed, or alternatively other steps or other units inherent to the process, the method, the product, or the apparatus.

Embodiments of the invention provide a vehicle collision detection method and a vehicle control system, which can improve the accuracy of vehicle collision detection. Details are described below.

Embodiment 1 is just an example useful for understanding the invention but outside the scope of the invention as claimed.

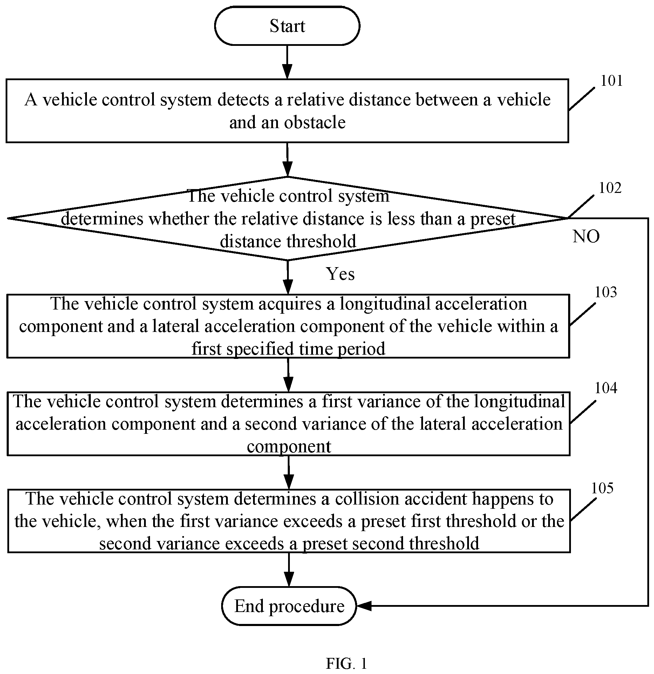

Referring to FIG. 1, FIG. 1 is a schematic flowchart of a vehicle collision detection method according to an embodiment of the invention. As illustrated in FIG. 1, the vehicle collision detection method includes the following steps.

101, A vehicle control system detects a relative distance between a vehicle and an obstacle.

In the embodiment of the invention, the vehicle control system may detect the relative distance between the vehicle and the obstacle by using measurement data detected by a distance measuring sensor and/or a camera. The distance measuring sensor may be an ultrasonic distance measuring sensor, a laser distance measuring sensor, an infrared distance measuring sensor, a microwave distance measuring sensor, and so on, which are not limited by the embodiment of the invention. When the vehicle control system detects the relative distance between the vehicle and the obstacle by the distance measuring sensor, it can directly read the distance data fed back by the distance measuring sensor, and take the distance data as a first distance between the vehicle and the obstacle. However, the distance measuring sensor has a distance measuring range. When a real distance between the vehicle and the obstacle exceeds the distance measuring range, there is a certain difference between the distance data fed back by the distance measuring sensor and the real distance. In the embodiment of the invention, the vehicle control system determines whether the distance between the vehicle and the obstacle is too close based on the distance data fed back by the distance measurement sensor, so it is necessary to consider a lower limit of the distance measuring range. Preferably, after receiving the distance data fed back by the distance measuring sensor, the vehicle control system can determine whether the distance data is the lower limit of the distance measuring range of the distance measuring sensor. And if yes, the vehicle control system acquires acceleration information of the vehicle to calculate an estimated moving distance of the vehicle within a period of time, so as to accurately determine the relative distance between the vehicle and the obstacle according to the distance data fed back by the distance measuring sensor and the estimated moving distance.

Please add the explanation content of right 4 here.

102, The vehicle control system determines whether the relative distance is less than a preset distance threshold. And if yes, the step 103 is performed, if not, the procedure is ended.

In the embodiment of the invention, the preset distance threshold may be set by a user. Specifically, the preset distance threshold can be set to a smaller value. When the relative distance between the vehicle and the obstacle is less than the preset distance threshold, it can be considered that a collision between the vehicle and the obstacle will happen. Since the sudden braking is an emergency braking behavior actively carried out by the driver, the vehicle is relatively far away from the obstacle at this time. Therefore, according to the determination of the relative distance, the probability of misjudging the sudden braking as a collision accident can be reduced. As an optional example, a vehicle speed can further be a pre-detection condition. Specifically, after determining that the relative distance between the vehicle and the obstacle is less than the distance threshold, and before performing the following step 103, it can be determined whether the vehicle speed exceeds a certain speed threshold. And if yes, the step 103 is continuously performed. Thus, the acceleration information of the vehicle can be acquired when the relative distance between the vehicle and the obstacle is less than the distance threshold and the vehicle speed exceeds the speed threshold.

103, The vehicle control system acquires a longitudinal acceleration component and a lateral acceleration component of the vehicle within a first specified time period.

Generally, when the vehicle is normally running, an acceleration variation is small (for example, the acceleration variation is less than 5g). When the collision accident happens to the vehicle, the acceleration may greatly change in a short time due to the impact of an external force. In the embodiment of the invention, the acceleration of the vehicle in the horizontal direction (i.e., a longitudinal acceleration and a lateral acceleration) may be considered. Specifically, the acceleration components in various directions may be measured by the accelerometer of the vehicle. The first specified time period can be set, for example, the first specified time period can be 1s. The measurement frequency of the accelerometer is relatively high. Within the first specified time period, the accelerometer can respectively measure a set of acceleration component data in each direction.

104. The vehicle control system determines a first variance of the longitudinal acceleration component and a second variance of the lateral acceleration component.

In the embodiment of the invention, since the variance is a parameter relative to the dispersion degree of a set of data, it can be determined whether the acceleration has a sudden change by calculating the variance of the acceleration component. The greater the variance of the acceleration component in each direction of the vehicle is, the higher the dispersion degree of the acceleration component in each direction of the vehicle is. Thus, the sudden change in acceleration is prone to occur. The variance of the acceleration component in each direction can be calculated by the following formula:

$$\sigma^2 = \frac{\Sigma (X-\mu)^2}{N},$$

Wherein, $\sigma2$ is a variance of the acceleration component in a direction, X is a group of the acceleration components in the direction, $\mu$ is an average value of the acceleration components in the direction within the first specified time period, and N is the number of the acceleration components obtained in the direction.

105. The vehicle control system determines a collision accident happens to the vehicle, when the first variance exceeds a preset first threshold or the second variance exceeds a preset second threshold. In the embodiment of the invention, the first threshold is determined according to a variance of the longitudinal acceleration component of the vehicle in a normal running process, and the second threshold is determined according to the variance of the lateral acceleration component of the vehicle in a normal running process. When any of the first variance and the second variance exceeds the corresponding threshold, it can be considered that the vehicle has a sudden acceleration change in the direction, thereby determining that the collision accident happened to the vehicle.

It can be seen that, in the method described in FIG. 1, it is firstly determined whether the relative distance between the vehicle and the obstacle is less than the distance threshold. And then, the variance of the longitudinal acceleration component and the variance of lateral acceleration component of the vehicle are calculated. When any one of the first variance of the longitudinal acceleration component and the second variance of the lateral acceleration component exceeds the corresponding threshold, it can be considered that the collision accident happens to the vehicle. Therefore, according to the method described in FIG. 1, the probability of misjudging the emergency brake as a collision accident can be reduced, thereby improving the accuracy of vehicle collision detection.

Embodiment 2

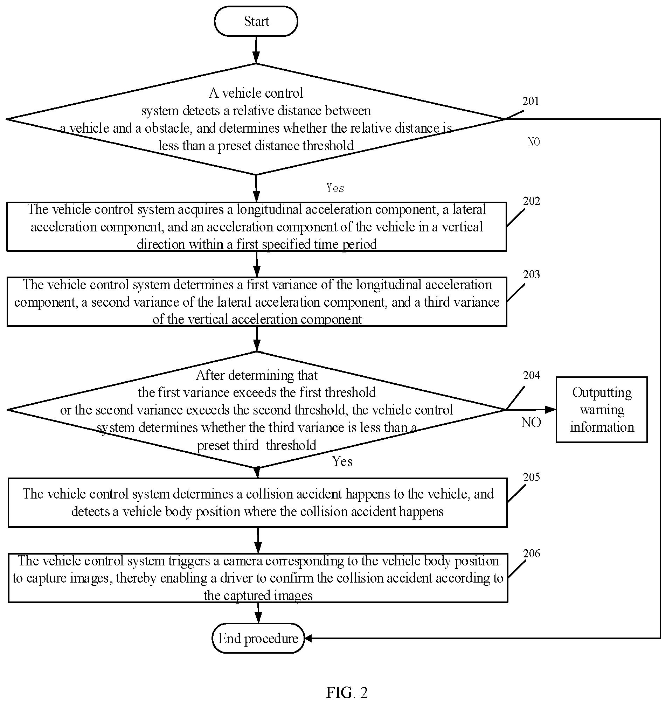

Referring to FIG. 2, FIG. 2 is a schematic flowchart of another vehicle collision detection method according to the embodiment of the invention. As illustrated in FIG. 2, the vehicle collision detection method includes the following steps.

201. A vehicle control system detects a relative distance between a vehicle and an obstacle, and determines whether the relative distance is less than a preset distance threshold. And if yes, step 202 is performed, if not, the procedure is ended.

202. The vehicle control system acquires a longitudinal acceleration component, a lateral acceleration component, and an acceleration component of the vehicle in a vertical direction within a first specified time period.

In the embodiment of the invention, the acceleration components can be acquired from measurement data of a tri-axis accelerometer of the vehicle. The tri-axis accelerometer can acquire the acceleration components of the vehicle in X-axis (longitudinal direction), Y-axis (lateral direction), and Z-axis (vertical direction) centered on the vehicle.

203. The vehicle control system determines a first variance of the longitudinal acceleration component, a second variance of the lateral acceleration component, and a third variance of the vertical acceleration component.

204. After determining that the first variance exceeds the first threshold or the second variance exceeds the second threshold, the vehicle control system determines whether the third variance is less than a preset third threshold, and if yes, the steps 205 to 206 are performed, if not, warning information is output.

In the embodiment of the invention, the accuracy of collision detection can be further improved by determining the variance of the acceleration component in the vertical direction. In most cases, a sudden change of the acceleration component in a horizontal direction of the vehicle is caused by the collision. However, it has been found that acceleration component in the horizontal direction may also change suddenly when the vehicle is running through a speed bump or an uneven road. In order to further eliminate the influence of the sudden change of the acceleration component, the embodiment of the invention introduces the judgment of the acceleration component in the vertical direction of the vehicle. When the vehicle is running through the speed bump or the uneven road, the vehicle body may bump up and down, and the acceleration component in the vertical direction will greatly change. Therefore, in this embodiment, after determining that the longitudinal first variance exceeds the first threshold or the lateral second variance exceeds the second threshold, it is further determined whether the third variance in the vertical direction is less than the third threshold. And if yes, the following step 205 is performed to determine that the collision accident happens to the vehicle. The third threshold can be determined according to the variance of acceleration component in the vertical direction in a normal running process of the vehicle.

In addition, as an optional example, when the variance of the acceleration component of the vehicle does not exceed the corresponding threshold, it can be considered that the collision accident does not happen to the vehicle. Or, the warning information can be output to notify the driver to confirm whether the collision has happened.

205. The vehicle control system determines a collision accident happens to the vehicle, and detects a vehicle body position where the collision accident happens.

In the embodiment of the invention, the vehicle control system can determine the vehicle body position where the collision accident happens by detecting an installation position of the distance measuring sensor that detects the obstacle close to the vehicle. For example, if an ultrasonic distance sensor installed on the left side of the front of the vehicle (based on a running direction of the vehicle) detects the obstacle whose relative distance to the vehicle is less than the distance threshold, and it is determined that the collision accident has happened to the vehicle by performing the above steps 202 to 204, it can be determined that the collision accident has happened on the left side of the front of the vehicle.

206. The vehicle control system triggers a camera corresponding to the vehicle body position to capture images, thereby enabling a driver to confirm the collision accident according to the captured images.

In the embodiment of the invention, the camera corresponding to the vehicle body position where the collision accident happens has a view range including the vehicle body position where the collision accident happens. Optionally, an installation position of the camera can be different with the vehicle body position where the collision accident happens. For example, if the vehicle control system detects the collision accident on the left side of the front of the vehicle, by controlling a driving mirror installed on the left side of the vehicle, the camera can face the left side of the front of the vehicle to capture images. Further, the vehicle control system can output the image captured by the camera to a display screen inside the vehicle to display, thereby enabling the driver of the vehicle can use the captured image to confirm the collision accident. Or, the captured images can also be sent to a terminal which is bound with the vehicle in advance, so that the terminal can store the captured images as a certification for the confirmation.

It can be seen that, in the method described in FIG. 2, when determining that the relative distance between the vehicle and the obstacle is relatively small, it can be determined that there is the sudden change of the acceleration by calculating the variance of the acceleration component, thereby determining that the collision accident happens to the vehicle. In addition, in the method described in FIG. 2, after determining the collision accident happens to the vehicle, the corresponding camera can also be triggered to capture the images, thereby enabling the driver to confirm the collision accident according to the captured images. Thus, the purpose of further verifying and preserving evidence of the accident evidence can be achieved.

Embodiment 3

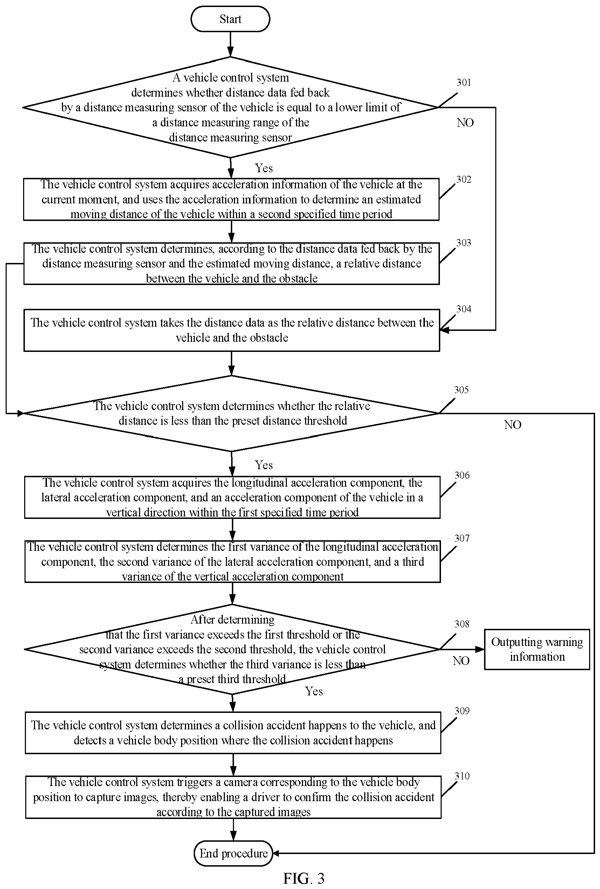

Referring to FIG. 3, FIG. 3 is still another vehicle collision detection method according to an embodiment of the invention. As illustrated in FIG. 3, the vehicle collision detection method may include the following steps.

301. A vehicle control system determines whether distance data fed back by a distance measuring sensor of the vehicle is equal to a lower limit of a distance measuring range of the distance measuring sensor. And if yes, steps 302 to 303 are performed, if not and a first distance is greater than the lower limit of the distance measuring range, step 304 is performed.

In the embodiment of the invention, for example, an ultrasonic distance measuring sensor is used. The lower limit of the distance measuring range of the ultrasonic sensor can be 26 cm (according to the different performance of the ultrasonic sensor, the value of the lower limit of the distance measuring range can be different). When a real distance between the vehicle and the obstacle is less than 26cm, the distance data fed by the ultrasonic sensor will always be 26cm. Therefore, when the distance data fed back by the ultrasonic distance measuring sensor is 26 cm, it can be considered that the distance data is unreliable. After receiving the distance data fed back by the distance measuring sensor, the vehicle control system performs the following steps 302 to 304 instead of directly taking the distance data as the distance between the vehicle and the obstacle.

302. The vehicle control system acquires acceleration information of the vehicle at the current moment, and uses the acceleration information to determine an estimated moving distance of the vehicle within a second specified time period.

In the embodiment of the invention, the second specified time period can be a relatively short time. Preferably, it can be a reaction time of a driver (i.e., 0.3s to 1.0s). Specifically, the acceleration information is used to integrate the second specified time period in time, thereby calculating the estimated moving distance of the vehicle after the specified time period. Specifically, it can be represented by the following formula:

$$\vec{L} = \int \left( \int \vec{(a)} \, dt \right) dt;$$

Wherein, $\vec{L}$ is the estimated moving distance of the vehicle in the specified time period, $\overrightarrow{(a)}$ is the acceleration information, and t is the time. 303. The vehicle control system determines, according to the distance data fed back by the distance measuring sensor and the estimated moving distance, a relative distance between the vehicle and the obstacle.

In the embodiment of the invention, the vehicle control system can determine the relative distance between the vehicle and the obstacle according to the distance data fed back by the distance measuring sensor and the estimated moving distance. Preferably, the difference between the distance data and the estimated moving distance can be taken as the relative distance between the vehicle and the obstacle.

The following scenes can be considered. When the vehicle is about to collide with the obstacle, the relative distance between the vehicle and the obstacle will gradually be decreased, and also, the distance data fed by the distance measuring sensor will gradually be decreased. When the distance data fed by the distance measuring sensor is the lower limit of the distance measuring range, the acceleration data of the vehicle is used to estimate the estimated moving distance of the vehicle at the next moment (i.e., the second specified time period). According to the distance data fed by the ultrasonic sensors and the estimated moving distance, a relative distance between the vehicle and the obstacle at the next moment can be accurately determined. In the above steps 302 to 303, when the real distance between the vehicle and the obstacle is less than the lower limit of the distance measuring range, the acceleration data can be used to calculate the relative distance between the vehicle and the obstacle, and the measurement accuracy of the ultrasonic distance measuring sensor can be improved without rebuilding hardware.

304. The vehicle control system takes the distance data as the relative distance between the vehicle and the obstacle.

In the embodiment of the invention, when the distance data fed back by the ultrasonic distance measuring sensor is not the lower limit of the distance measuring range, especially when the distance data is greater than the lower limit of the distance measuring range, the distance data can be considered reliable. Thus, the distance data fed back by the ultrasonic distance measuring sensor can be directly taken as the relative distance between the vehicle and the obstacle so as to reduce calculation load.

305. The vehicle control system determines whether the relative distance is less than a preset distance threshold, and if yes, step 306 is performed, and if not, the procedure is ended.

The steps 306 to 310 in the present embodiment of the invention are similar to the steps 202 to 206 in the embodiment 2, and are not described here.

In the method described in FIG. 3, when determining the vehicle is close to the obstacle, the collision accident of the vehicle can be determined by analyzing the acceleration information of the vehicle. Further, the collision accident of the vehicle can be confirmed according to the images captured by the camera. In addition, in the method described in FIG. 3, the distance sensor can be used to detect the distance between the vehicle and the obstacle. When the distance data fed by the distance sensor is the lower limit of the distance measuring range, the acceleration data of the vehicle can be used to calculate the estimated moving distance of the vehicle at the specified time period. Thus, the relative distance between the vehicle and the obstacle at the next moment can be accurately determined according to the distance data. Furthermore, the measurement accuracy of the ultrasonic distance measuring sensor can be increased without rebuilding hardware. Conversely, when the distance data fed by the ultrasonic sensor is not the lower limit of the distance measuring range, the distance data fed back by the distance measuring sensor can be taken as the relative distance between the vehicle and the obstacle, thereby reducing calculation load.

Embodiment 4 is just an example useful for understanding the invention but outside the scope of the invention as claimed.

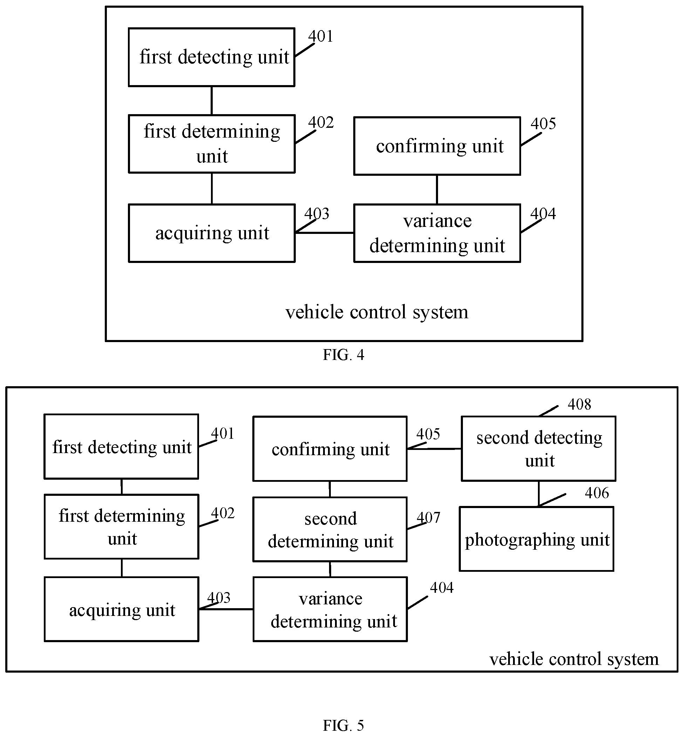

Referring to FIG. 4, FIG. 4 is a schematic block diagram of a vehicle control system according to an embodiment of the invention. As illustrated in FIG. 4, the vehicle control system includes a first detecting unit 401, a first determining unit 402, an acquiring unit 403, a variance determining unit 404 and a confirming unit 405.

The first detecting unit 401 is configured to detect a relative distance between a vehicle and an obstacle.

The first determining unit 402 is configured to determine whether the relative distance by the first detecting unit 401 is less than a preset distance threshold.

In the embodiment of the invention, the preset distance threshold can be set by a user. The preset distance threshold can be a smaller value. When the relative distance between the vehicle and the obstacle is less than the distance threshold, it can be considered that a collision between the vehicle and the obstacle there will happen.

The acquiring unit 403 is configured to acquire a longitudinal acceleration component and a lateral acceleration component of the vehicle within a first specified time period, when the determining unit 402 determining that the relative distance is less than a preset distance threshold.

The variance determining unit 404 is configured to determine a first variance of the longitudinal acceleration component acquired by the acquiring unit 403 and a second variance of the lateral acceleration component acquired by the acquiring unit 403.

The confirming unit 405, is configured to determine that a collision accident happens to the vehicle, when the variance determining unit 404 determines that the first variance exceeds a preset first threshold or that the second variance exceeds a preset second threshold.

In addition, as an optional example, after the determining unit 402 determines that the relative distance is less than the distance threshold, and before triggering acquiring unit 403 to acquiring the acceleration information of the vehicle corresponding to the relative distance less than the distance threshold, the following steps can also be performed.

Whether the speed of the vehicle exceeds a certain speed threshold is determined, and if yes, the acquisition unit 403 is triggered to perform the step of acquiring the acceleration information of the vehicle corresponding to the relative distance less than the distance threshold.

In this embodiment, the distance and the vehicle speed can be a dual judgment. Thus, the acquiring unit 403 can acquire the acceleration information of the vehicle when the relative distance between the vehicle and the obstacle is less than the distance threshold and the vehicle speed exceeds the speed threshold, thereby further increasing the accuracy of detecting the collision.

In summary, the vehicle control system illustrated in FIG. 4 can confirm the collision of the vehicle according to the acceleration information of the vehicle (i.e., the variance of the acceleration component in the horizontal direction), when it is determined that the relative distance between the vehicle and the obstacle is less than the distance threshold. Therefore, the probability of misjudging the emergency brake as a collision accident can be reduced and the accuracy of detecting the collision can be increased.

Embodiment 5

Referring to FIG. 5, FIG. 5 is a schematic block diagram of another vehicle control system according to an embodiment of the invention. The vehicle control system illustrated in FIG. 5 is obtained by optimizing the vehicle control system illustrated in FIG. 4. In the vehicle control system illustrated in FIG. 5.

The acquiring unit 403 is further configured to acquire an acceleration component of the vehicle in a vertical direction within the first specified time period, when the first determining unit 402 determines that the relative distance is less than the distance threshold.

Correspondingly, the variance determining unit 404 is further configured to determine a third variance of the vertical acceleration component.

And, the vehicle control system illustrated in FIG. 5 further includes a second determining unit 407.

The second determining unit 407 is configured to determine whether the third variance determined by the variance determining unit 404 is less than a preset third threshold.

The confirming unit 405 is configured to determine a collision accident happening to the vehicle, when the first variance exceeds the first threshold or the second variance exceeds the second threshold, and when the second determining unit 407 determines that the third variance is less than the third threshold.

In the embodiment of the invention, the confirming unit 405 may determine the sudden change of the acceleration of the vehicle according to the variance of the acceleration component of the vehicle, thereby confirming a collision accident happening to the vehicle according to the sudden change of acceleration. In addition, the vehicle control system illustrated in FIG. 5 can further detect the variance of the acceleration component in the vertical direction, thereby reducing the impact of detecting the collision of the vehicle running on the speed bump or the uneven road, and further increasing the accuracy of detecting the collision.

Optionally, the vehicle control system illustrated in FIG. 5 may further include a second detecting unit 408 and a photographing unit 406.

The second detecting unit 408 is configured to detect a vehicle body position where the collision accident happens, after the confirming unit 405 determines the collision accident happening to the vehicle.

In the embodiment of the invention, the second detecting unit 408 may determine the vehicle body position where the collision accident happens by detecting an installation position of the sensor detecting the detected obstacle.

The photographing unit 406 is configured to trigger a camera corresponding to the vehicle body position detected by the confirming unit 405 to capture images, thereby enabling a driver to confirm the collision accident according to the captured images.

In the embodiment of the invention, after the photographing unit 406 captures the images, the photographing unit 406 can send the images to a display screen inside the vehicle to display, thereby enabling the driver can use the captured images to confirm the collision accident. Or, the photographing unit 406 can also send the image to the terminal which is bound with the vehicle in advance, so that the terminal can store the images as a certification for the confirmation.

It can be seen that, in the vehicle control system illustrated in Figure 5, when determining the relative distance between the vehicle and the obstacle is relatively small, the vehicle control system determines a sudden change of the acceleration by calculating the variance of the acceleration component, thereby determining that the collision accident happens to the vehicle. In addition, the vehicle control system illustrated in Figure 5 can also trigger the corresponding camera to capture the images after determining the collision accident, thereby enabling the driver to confirm the collision accident according to the captured images. Thus, the purpose of further verifying and preserving evidence of the accident evidence can be achieved.

Embodiment 6

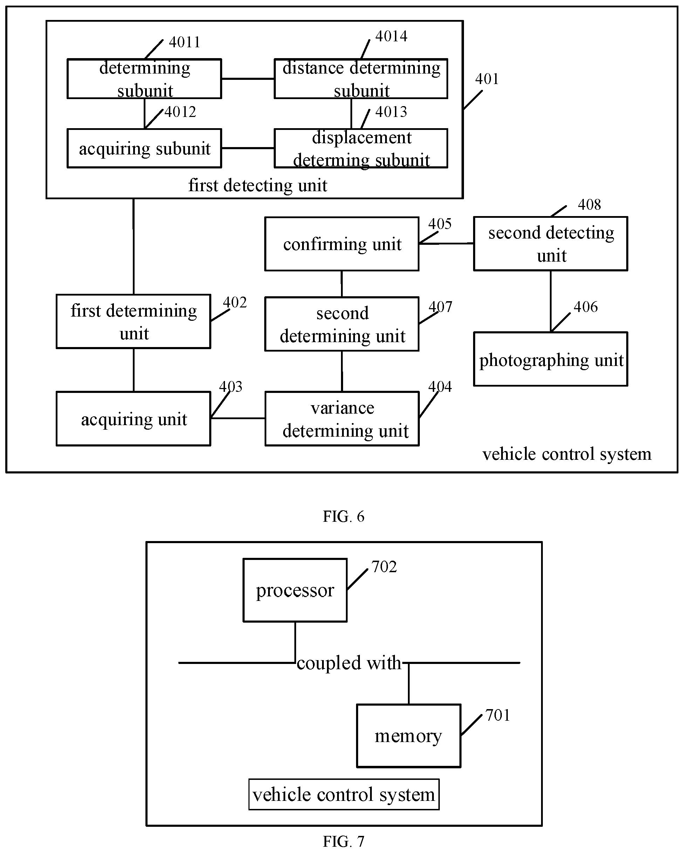

Referring to FIG. 6, FIG. 6 is a schematic block diagram of still another vehicle control system according to an embodiment of the invention. The vehicle control system illustrated in FIG. 6 is obtained by optimizing the vehicle control system illustrated in FIG. 5. As illustrated in FIG. 6, the first detecting unit 401 may include a determining subunit 4011, an acquiring subunit 4012, a displacement determining subunit 4013 and distance determining subunit 4014.

The determining subunit 4011is configured to determine whether a distance data fed back by a distance measuring sensor of the vehicle is equal to a lower limit of a distance measuring range of the distance measuring sensor.

The acquiring subunit 4012 is configured to acquire acceleration information of the vehicle at the current moment, when the determining subunit 4011 determines that the distance data is the lower limit.

The displacement determining subunit 4013 is configured to use the acceleration information acquired by the acquiring subunit 4012 to determine an estimated moving distance of the vehicle within a second specified time period.

In the embodiment of the invention, the displacement determining subunit 4013 may use the acceleration information to integrate the second specified time period in time, thereby calculating the estimated moving distance of the vehicle after the specified time period.

The distance determining subunit 4014 is configured to determine, according to the distance data and the estimated moving distance by the displacement determining subunit 4013, a relative distance between the vehicle and the obstacle. Optionally, the distance determining subunit 4014 is further configured to take the first distance as the relative distance between the vehicle and the obstacle, when the second determining subunit 4011 determines that the first distance is greater than the lower limit.

It can be seen that, in the vehicle control system illustrated in Figure 5, when determining the vehicle is close to the obstacle, the collision accident of the vehicle can be determined by analyzing the acceleration information of the vehicle. Further, the collision accident of the vehicle can be confirmed according to the images captured by the camera. The vehicle control system also can accurately calculate the relative distance between the vehicle and the obstacle by using the acceleration information of the vehicle, when the real distance between the vehicle and the obstacle is less than the lower limit of the distance measuring range of the distance measuring sensor. Thus, the accuracy of the distance measuring sensor can be increased without rebuilding hardware. The distance data fed back by the distance measuring sensor can be taken as the relative distance between the vehicle and the obstacle, when the real distance is greater than the lower limit, thereby reducing the calculation load.

Embodiment 7

Referring to FIG. 7, FIG. 7 is a schematic block diagram of yet another vehicle control system according to an embodiment of the invention. As illustrated in FIG. 7, the vehicle control system may include:

A memory 701 configured to store executable program codes;
A processor 702 coupled with the memory 701;

Wherein, the processor 702 is configured to perform any of the methods of the vehicle collision detection methods of FIG. 1 to FIG. 3 by invoking the executable program codes stored in the memory 702.

It should be noted that, the vehicle control system illustrated in FIG. 7 may further include unshown components such as a power supply, an accelerometer, a camera, and a distance sensor (for example, an ultrasonic radar, an ultrasonic distance sensor, an infrared distance sensor), and so on, which are not described here.

The embodiment of the invention, which is just an example useful for understanding the invention but outside the scope of the invention as claimed, discloses a computer-readable storage medium, which stores a computer program, the computer program is executed by a computer perform any of the vehicle collision detection methods illustrated in FIG. 1 to FIG. 3.

The embodiment of the invention, which is just an example useful for understanding the invention but outside the scope of the invention as claimed, provides a computer program product. The computer program product includes a non-transitory computer readable storage medium storing a computer program. The computer programs are executed by a computer to perform any of the vehicle collision detection methods illustrated in FIG. 1 to FIG. 3.

It should be understood that "one embodiment" or "an embodiment" mentioned in the entire specification means that characteristics, structures, or features related to the embodiment are included in at least one embodiment of this invention. Therefore, "in one embodiment" or "in an embodiment" in the specification does not refer to the same embodiment. In addition, these characteristics, structures, or features may be combined in one or more embodiments by using any suitable manner. Persons skilled in the art should also understand that all the embodiments described in the specification are optional embodiments, and the related steps and modules are not essential for the invention.

In these various embodiments of the invention, it should be understood that the size of the sequence numbers of the aforementioned processes does not mean the necessary sequence of execution. The execution order of each process should be determined by its function and internal logic, and should not be implemented in the invention. The implementation process of the embodiment of the invention does not limited by the sequence. Some or all of the units may be selected according to actual needs to achieve the objectives of the solution in this embodiment.

The units described as separate components may or may not be physically separated, and the components displayed as units may or may not be object units. That is, the components may be located in one place, or may be distributed on a number of multiple network units. Some or all of the units may be selected according to actual requirement to achieve the purpose of the embodiment.

In addition, functional units in each embodiment of the invention may be integrated into one processing unit, or each of the functional units may physically exist alone, or two or more functional units may be integrated into one unit. The above-mentioned integrated unit can be implemented in the form of hardware or in the form of software functional unit.

When the integrated unit is implemented in the form of the software functional unit and is sold or used as an independent product, the integrated unit may be stored in a computer-readable storage medium. Based on such understanding, the technical solution of the invention, or the part contributing to the related art, or all or part of the technical solution, may essentially be presented in the form of a software product stored in a storage medium. The software product includes several instructions for a computer device (i.e., a personal computer, a server, or a network device, and so on, in detail, a processor in the computer device) to execute all or part of the steps of the methods according to the embodiments of the invention.

One ordinary skilled in the art can understand that all or part in the various methods of the above-mentioned embodiments can be completed by a program to instructing related hardware. The program can be stored in a computer readable storage medium, and the storage medium includes read-only memory (ROM), random access memory (RAM), programmable read-only memory (PROM), erasable programmable read only memory (EPROM), one-time programmable read-only memory (OTPROM), electronically-erasable programmable read-only memory (EEPROM), compact disc read-only (CD-ROM) or other optical disc storage, disk storage, magnetic tape storage, or any other computer-readable medium that can be used to carry or store data.

**Claims**

1. A vehicle collision detection method, comprising:

   detecting (101) a relative distance between a vehicle and an obstacle;
   determining (102) whether the relative distance is less than a preset distance threshold, and if yes, acquiring (103) a longitudinal acceleration component and a lateral acceleration component of the vehicle within a first specified time period;
**characterized in that**, the method further comprising:

   determining (104) a first variance of the longitudinal acceleration component and a second variance of the lateral acceleration component;
   determining (105) a collision accident happens to the vehicle, when the first variance exceeds a preset first threshold or the second variance exceeds a preset second threshold;
   after determining (102) that the relative distance is less than the distance threshold, the method further comprising:

   acquiring (202) an acceleration component of the vehicle in a vertical direction within the first specified time period, and determining (204) a third variance of the vertical acceleration component;
   after determining (105) that the first variance exceeds the preset first threshold or the second variance exceeds the preset second threshold, the method further comprising:
   determining (203) whether the third variance is less than a preset third threshold, and if yes, performing the operation of determining a collision accident happens to the vehicle.

2. The vehicle collision detection method of claim 1, wherein if the third variance is not less than the preset third threshold, warning information is output.

3. The vehicle collision detection method of claim 1, after determining (203) a collision accident happens to the vehicle, the method further comprising:

   detecting (205) a vehicle body position where the collision accident happens;
   triggering (206) a camera corresponding to the vehicle body position to capture images, thereby enabling a driver to confirm the collision accident according to the captured images.

4. The vehicle collision detection method of claim 3, wherein detecting (205) the vehicle body position where the collision accident happens comprises:
   determining the vehicle body position where the collision accident happens by detecting an installation position of a distance measuring sensor that detects the obstacle close to the vehicle.

**5.** The vehicle collision detection method of claim 3, wherein triggering (206) the camera corresponding to the vehicle body position to the capture images, thereby enabling a driver to confirm the collision accident according to the captured images comprises:

outputting the image captured by the camera to a display screen inside the vehicle to display; or sending the captured images to a terminal which is bound with the vehicle in advance.

**6.** The vehicle collision detection method of claim 1, wherein detecting (101) the relative distance between the vehicle and the obstacle comprises:

determining (301) whether distance data fed back by a distance measuring sensor of the vehicle is equal to a lower limit of a distance measuring range of the distance measuring sensor, and if yes, acquiring (302) acceleration information of the vehicle at the current moment; using the acceleration information to determine (302) an estimated moving distance of the vehicle within a second specified time period; determining (303), according to the distance data and the estimated moving distance, the relative distance between the vehicle and the obstacle.

**7.** The vehicle collision detection method of claim 6, wherein determining (303), according to the distance data and the estimated moving distance, the relative distance between the vehicle and the obstacle comprises:
taking a difference between the distance data and the estimated moving distance as the relative distance between the vehicle and the obstacle.

**8.** The vehicle collision detection method of claim 6, when determining (301) that the distance data is greater than the lower limit, the method further comprising:
taking (304) the distance data as the relative distance between the vehicle and the obstacle.

**9.** The vehicle collision detection method of claim 1, wherein the first threshold is determined according to a variance of the longitudinal acceleration component of the vehicle in a normal running process, and the second threshold is determined according to the variance of the lateral acceleration component of the vehicle in a normal running process.

**10.** A vehicle control system, comprising:

a first detecting unit (401), configured to detect a relative distance between a vehicle and an obstacle;

a first determining unit (402), configured to determine whether the relative distance is less than a preset distance threshold;
an acquiring unit (403), configured to acquire a longitudinal acceleration component and a lateral acceleration component of the vehicle within a first specified time period, when the determining unit (402) determining that the relative distance is less than a preset distance threshold;
**characterized in that**, the vehicle control system further comprising:

a variance determining unit (404), configured to determine a first variance of the longitudinal acceleration component and a second variance of the lateral acceleration component;
a confirming unit (405), configured to determine a collision accident happens to the vehicle, when the first variance exceeds a preset first threshold or the second variance exceeds a preset second threshold;
the acquiring unit (403) is further configured to acquire an acceleration component of the vehicle in a vertical direction within the first specified time period, when the determining unit (402) determining that the relative distance is less than the distance threshold;
the variance determining unit (404) is further configured to determine a third variance of the vertical acceleration component;
the vehicle control system further comprising:

a second determining unit (407), configured to determine whether the third variance is less than a preset third threshold;
the confirming unit (405) is specifically configured to determine a collision accident happens to the vehicle, when the first variance exceeds the first threshold or the second variance exceeds the second threshold, and when the second determining unit (407) determining that the third variance is less than the third threshold.

**11.** The vehicle control system of claim 10, further comprising:

a second detecting unit (408), configured to detect a vehicle body position where the collision accident happens;
a photographing unit (406), configured to trigger a camera corresponding to the vehicle body position to capture images, thereby enabling a driver to confirm the collision accident according to the captured images.

12. The vehicle control system of claim 10, wherein the first determining unit (402) comprises:

a determining subunit (4011), configured to determine whether a distance data fed back by a distance measuring sensor of the vehicle is equal to a lower limit of a distance measuring range of the distance measuring sensor;

an acquiring subunit (4012), configured to acquire acceleration information of the vehicle at the current moment, when the determining subunit (4011) determining that the distance data is the lower limit;

a displacement determining subunit (4013), configured to use the acceleration the information to determine an estimated moving distance of the vehicle within a second specified time period;

a distance determining subunit (4014), configured to determine, according to the distance data and the estimated moving distance, the relative distance between the vehicle and the obstacle.

13. The vehicle control system of claim 12, wherein the distance determining subunit (4014) is further configured to take the distance data as the relative distance between the vehicle and the obstacle, when the second determining subunit (4011) determining that the distance data is greater than the lower limit.

**Patentansprüche**

1. Fahrzeugkollisionserkennungsverfahren, das Folgendes beinhaltet:

Erkennen (101) eines relativen Abstands zwischen einem Fahrzeug und einem Hindernis;
Feststellen (102), ob der relative Abstand kleiner als ein voreingestellter Abstandsschwellenwert ist, und wenn ja,
Erfassen (103) einer Längsbeschleunigungskomponente und einer Querbeschleunigungskomponente des Fahrzeugs innerhalb einer ersten spezifizierten Zeitperiode;
**dadurch gekennzeichnet, dass** das Verfahren ferner Folgendes beinhaltet:

Bestimmen (104) einer ersten Abweichung der Längsbeschleunigungskomponente und einer zweiten Abweichung der Querbeschleunigungskomponente;
Feststellen (105), dass sich ein Kollisionsunfall mit dem Fahrzeug ereignet, wenn die erste Abweichung einen voreingestellten ersten Schwellenwert oder die zweite Abweichung einen voreingestellten zweiten Schwellenwert überschreitet;
wobei das Verfahren nach dem Feststellen (102), dass der relative Abstand kleiner als der Abstandsschwellenwert ist, ferner Folgendes beinhaltet:

Erfassen (202) einer Beschleunigungskomponente des Fahrzeugs in einer vertikalen Richtung innerhalb der ersten spezifizierten Zeitperiode, und Bestimmen (204) einer dritten Abweichung der vertikalen Beschleunigungskomponente;
wobei das Verfahren nach dem Feststellen (105), dass die erste Abweichung den voreingestellten ersten Schwellenwert oder die zweite Abweichung den voreingestellten zweiten Schwellenwert überschreitet, ferner Folgendes beinhaltet:
Feststellen (203), ob die dritte Abweichung kleiner als ein voreingestellter dritter Schwellenwert ist, und wenn ja, Durchführen des Vorgangs des Feststellens, dass sich ein Kollisionsunfall mit dem Fahrzeug ereignet.

2. Fahrzeugkollisionserkennungsverfahren nach Anspruch 1, wobei, wenn die dritte Abweichung nicht kleiner als der voreingestellte dritte Schwellenwert ist, Warninformationen ausgegeben werden.

3. Fahrzeugkollisionserkennungsverfahren nach Anspruch 1, wobei das Verfahren nach dem Feststellen (203), dass sich ein Kollisionsunfall mit dem Fahrzeug ereignet, ferner Folgendes beinhaltet:

Erkennen (205) einer Fahrzeugkarosserieposition, an der sich der Kollisionsunfall ereignet;
Auslösen (206) einer Kamera entsprechend der Fahrzeugkarosserieposition zum Aufnehmen von Bildern, so dass ein Fahrer den Kollisionsunfall anhand der aufgenommenen Bilder nachvollziehen kann.

4. Fahrzeugkollisionserkennungsverfahren nach Anspruch 3, wobei das Erkennen (205) der Fahrzeugkarosserieposition, an der sich der Kollisionsunfall ereignet, Folgendes beinhaltet:
Bestimmen der Fahrzeugkarosserieposition, an der sich der Kollisionsunfall ereignet, durch Erkennen einer Installationsposition eines Abstandsmesssensors, der das Hindernis in der Nähe des Fahrzeugs erkennt.

**5.** Fahrzeugkollisionserkennungsverfahren nach Anspruch 3, wobei das Auslösen (206) der Kamera entsprechend der Fahrzeugkarosserieposition zum Aufnehmen von Bildern, so dass ein Fahrer den Kollisionsunfall anhand der aufgenommenen Bilder nachvollziehen kann, Folgendes beinhaltet:

Ausgeben des von der Kamera aufgenommenen Bildes an einen Anzeigeschirm im Fahrzeug zur Anzeige; oder
Senden der aufgenommenen Bilder zu einem Terminal, das im Voraus mit dem Fahrzeug verbunden ist.

**6.** Fahrzeugkollisionserkennungsverfahren nach Anspruch 1, wobei das Erkennen (101) des relativen Abstands zwischen dem Fahrzeug und dem Hindernis Folgendes beinhaltet:

Feststellen (301), ob von einem Abstandsmesssensor des Fahrzeugs zurückgesendete Abstandsdaten gleich einer Untergrenze eines Abstandsmessbereichs des Abstandsmesssensors sind, und wenn ja, Erfassen (302) von Beschleunigungsinformationen des Fahrzeugs zum aktuellen Zeitpunkt;
Verwenden der Beschleunigungsinformationen zum Bestimmen (302) eines geschätzten Fahrwegs des Fahrzeugs innerhalb einer zweiten spezifizierten Zeitperiode;
Bestimmen (303) des relativen Abstands zwischen dem Fahrzeug und dem Hindernis gemäß den Abstandsdaten und dem geschätzten Fahrweg.

**7.** Fahrzeugkollisionserkennungsverfahren nach Anspruch 6, wobei das Bestimmen (303) des relativen Abstands zwischen dem Fahrzeug und dem Hindernis gemäß den Abstandsdaten und dem geschätzten Fahrweg Folgendes beinhaltet:
Nehmen einer Differenz zwischen den Abstandsdaten und dem geschätzten Fahrweg als den relativen Abstand zwischen dem Fahrzeug und dem Hindernis.

**8.** Fahrzeugkollisionserkennungsverfahren nach Anspruch 6, wobei das Verfahren beim Feststellen (301), dass die Abstandsdaten größer als die Untergrenze sind, ferner Folgendes beinhaltet:
Nehmen (304) der Abstandsdaten als den relativen Abstand zwischen dem Fahrzeug und dem Hindernis.

**9.** Fahrzeugkollisionserkennungsverfahren nach Anspruch 1, wobei der erste Schwellenwert gemäß einer Abweichung der Längsbeschleunigungskomponente des Fahrzeugs in einem normalen Fahrvorgang bestimmt wird und der zweite Schwellenwert gemäß der Abweichung der Querbeschleunigungskomponente des Fahrzeugs in einem normalen Fahrvorgang bestimmt wird.

**10.** Fahrzeugsteuersystem, das Folgendes umfasst:

eine erste Erkennungseinheit (401), die zum Erkennen eines relativen Abstands zwischen einem Fahrzeug und einem Hindernis konfiguriert ist;
eine erste Feststellungseinheit (402), konfiguriert zum Feststellen, ob der relative Abstand kleiner als ein voreingestellter Abstandsschwellenwert ist;
eine Erfassungseinheit (403), konfiguriert zum Erfassen einer Längsbeschleunigungskomponente und einer Querbeschleunigungskomponente des Fahrzeugs innerhalb einer ersten spezifizierten Zeitperiode, wenn die Feststellungseinheit (402) feststellt, dass der relative Abstand kleiner als ein voreingestellter Abstandsschwellenwert ist;
**dadurch gekennzeichnet, dass** das Fahrzeugsteuersystem ferner Folgendes umfasst:

eine Abweichungsbestimmungseinheit (404), konfiguriert zum Bestimmen einer ersten Abweichung der Längsbeschleunigungskomponente und einer zweiten Abweichung der Querbeschleunigungskomponente;
eine Bestätigungseinheit (405), konfiguriert zum Feststellen, dass sich ein Kollisionsunfall mit dem Fahrzeug ereignet, wenn die erste Abweichung einen voreingestellten ersten Schwellenwert oder die zweite Abweichung einen voreingestellten zweiten Schwellenwert überschreitet;
wobei die Erfassungseinheit (403) ferner zum Erfassen einer Beschleunigungskomponente des Fahrzeugs in einer vertikalen Richtung innerhalb der ersten spezifizierten Zeitperiode konfiguriert ist, wenn die Feststellungseinheit (402) feststellt, dass der relative Abstand kleiner als der Abstandsschwellenwert ist;
wobei die Abweichungsbestimmungseinheit (404) ferner zum Bestimmen einer dritten Abweichung der vertikalen Beschleunigungskomponente konfiguriert ist;
wobei das Fahrzeugsteuersystem ferner Folgendes umfasst:

eine zweite Feststellungseinheit (407), konfiguriert zum Feststellen, ob die dritte Abweichung kleiner als ein voreingestellter dritter Schwellenwert ist;
wobei die Bestätigungseinheit (405) speziell zum Feststellen konfiguriert ist, dass sich ein Kollisionsunfall mit dem Fahrzeug ereignet, wenn die erste Abweichung den ersten Schwellenwert oder die zweite Abweichung den zweiten Schwellenwert überschreitet, und wenn die zweite Feststellungseinheit (407) feststellt, dass die dritte Abweichung kleiner als der dritte Schwellenwert ist.

11. Fahrzeugsteuersystem nach Anspruch 10, das ferner Folgendes umfasst:

eine zweite Erkennungseinheit (408), konfiguriert zum Erkennen einer Fahrzeugkarosserieposition, an der sich der Kollisionsunfall ereignet;

eine Fotografiereinheit (406), konfiguriert zum Auslösen einer Kamera entsprechend der Fahrzeugkarosserieposition zum Aufnehmen von Bildern, so dass ein Fahrer den Kollisionsunfall anhand der aufgenommenen Bilder nachvollziehen kann.

12. Fahrzeugsteuersystem nach Anspruch 10, wobei die erste Feststellungseinheit (402) Folgendes umfasst:

eine Feststellungssubeinheit (4011), konfiguriert zum Feststellen, ob von einem Abstandsmesssensor des Fahrzeugs zurückgesendete Abstandsdaten gleich einer Untergrenze eines Abstandsmessbereichs des Abstandsmesssensors sind;

eine Erfassungssubeinheit (4012), konfiguriert zum Erfassen von Beschleunigungsinformationen des Fahrzeugs zum aktuellen Zeitpunkt, wenn die Feststellungssubeinheit (4011) feststellt, dass die Abstandsdaten die Untergrenze sind;

eine Verschiebungsbestimmungssubeinheit (4013), konfiguriert zum Verwenden der Beschleunigungsinformationen zum Bestimmen eines geschätzten Fahrwegs des Fahrzeugs innerhalb einer zweiten spezifizierten Zeitperiode;

eine Abstandsbestimmungssubeinheit (4014), konfiguriert zum Bestimmen des relativen Abstands zwischen dem Fahrzeug und dem Hindernis gemäß den Abstandsdaten und dem geschätzten Fahrweg.

13. Fahrzeugsteuersystem nach Anspruch 12, wobei die Abstandsbestimmungssubeinheit (4014) ferner zum Nehmen der Abstandsdaten als den relativen Abstand zwischen dem Fahrzeug und dem Hindernis konfiguriert ist, wenn die zweite Feststellungssubeinheit (4011) feststellt, dass die Abstandsdaten größer als die Untergrenze sind.

**Revendications**

1. Un procédé de détection de collision de véhicule, comprenant :

la détection (101) d'une distance relative entre un véhicule et un obstacle,
la détermination (102) si la distance relative est inférieure à un seuil de distance prédéfini, et si oui, l'acquisition (103) d'une composante d'accélération longitudinale et d'une composante d'accélération latérale du véhicule à l'intérieur d'une première période temporelle spécifiée, **caractérisé en ce que** le procédé comprend en outre :

la détermination (104) d'une première variance de la composante d'accélération longitudinale et d'une deuxième variance de la composante d'accélération latérale,
la détermination (105) qu'un accident par collision est arrivé au véhicule lorsque la première variance dépasse un premier seuil prédéfini ou que la deuxième variance dépasse un deuxième seuil prédéfini,
après la détermination (102) que la distance relative est inférieure à la distance seuil, le procédé comprenant en outre :

l'acquisition (202) d'une composante d'accélération du véhicule dans une direction verticale à l'intérieur de la première période temporelle spécifiée, et
la détermination (204) d'une troisième variance de la composante d'accélération verticale,
après la détermination (105) que la première variance dépasse le premier seuil prédéfini ou que la deuxième variance dépasse le deuxième seuil prédéfini, le procédé comprenant en outre :
la détermination (203) si la troisième variance est inférieure à un troisième seuil prédéfini, et si oui, l'exécution de l'opération de détermination qu'un accident par collision est arrivé au véhicule.

2. Le procédé de détection de collision de véhicule selon la Revendication 1, où si la troisième variance n'est pas inférieure au troisième seuil prédéfini, des informations d'alerte sont produites en sortie.

3. Le procédé de détection de collision de véhicule selon la Revendication 1, après la détermination (203) qu'un accident par collision est arrivé au véhicule, le procédé comprenant en outre :
la détection (205) d'une position de corps de véhicule là où l'accident par collision est arrivé, le déclenchement (206) d'un appareil de prise de vues correspondant à la position de corps de véhicule de façon à capturer des images, permettant ainsi à un conducteur de confirmer l'accident par collision en fonction des images capturées.

4. Le procédé de détection de collision de véhicule selon la Revendication 3, où la détection (205) de la position de corps de véhicule là où l'accident par collision est arrivé comprend :
la détermination de la position de corps de véhicule là où l'accident par collision est arrivé par la détection d'une position d'installation d'un capteur de mesure de distance qui détecte l'obstacle proche du véhicule.

5. Le procédé de détection de collision de véhicule selon la Revendication 3, où le déclenchement (206) de l'appareil de prise de vues correspondant à la position de corps de véhicule de façon à capturer des images, permettant ainsi à un conducteur de confirmer l'accident par collision en fonction des images capturées, comprend :

la production en sortie de l'image capturée par l'appareil de prise de vues vers un écran d'affichage à l'intérieur du véhicule en vue de l'afficher, ou
l'envoi des images capturées à un terminal qui est relié au véhicule à l'avance.

6. Le procédé de détection de collision de véhicule selon la Revendication 1, où la détection (101) de la distance relative entre le véhicule et l'obstacle comprend :

la détermination (301) si des données de distance retournées par une capteur de mesure de distance du véhicule sont égales à une limite inférieure d'une plage de mesure de distance du capteur de mesure de distance, et si oui, l'acquisition (302) d'informations d'accélération du véhicule à l'instant courant,
l'utilisation des informations d'accélération de façon à déterminer (302) une distance de déplacement estimée du véhicule à l'intérieur d'une deuxième période temporelle spécifiée, la détermination (303), en fonction des données de distance et de la distance de déplacement estimée, de la distance relative entre le véhicule et l'obstacle.

7. Le procédé de détection de collision de véhicule selon la Revendication 6, où la détermination (303), en fonction des données de distance et de la distance de déplacement estimée, de la distance relative entre le véhicule et l'obstacle comprend :
la prise d'une différence entre les données de distance et la distance de déplacement estimée en tant que distance relative entre le véhicule et l'obstacle.

8. Le procédé de détection de collision de véhicule selon la Revendication 6, lorsque la détermination (301) que les données de distance sont supérieures à la limite inférieure, le procédé comprenant en outre :
la prise (304) des données de distance en tant que distance relative entre le véhicule et l'obstacle.

9. Le procédé de détection de collision de véhicule selon la Revendication 1, où le premier seuil est déterminé en fonction d'une variance de la composante d'accélération longitudinale du véhicule dans un procédé de fonctionnement normal, et le deuxième seuil est déterminé en fonction de la variance de la composante d'accélération latérale du véhicule dans un procédé de fonctionnement normal.

10. Un système de commande de véhicule, comprenant :

une première unité de détection (401), configurée de façon à détecter une distance relative entre un véhicule et un obstacle,
une première unité de détermination (402), configurée de façon à déterminer si la distance relative est inférieure à un seuil de distance prédéfini,
une unité d'acquisition (403), configurée de façon à acquérir une composante d'accélération longitudinale et une composante d'accélération latérale du véhicule à l'intérieur d'une première période temporelle spécifiée, lorsque l'unité de détermination (402) détermine que la distance relative est inférieure à un seuil de distance prédéfini,
**caractérisé en ce que** le système de commande de véhicule comprend en outre :

une unité de détermination de variance (404), configurée de façon à déterminer une première variance de la composante d'accélération longitudinale et une deuxième variance de la composante d'accélération latérale,
une unité de confirmation (405), configurée de façon à déterminer qu'un accident par collision est arrivé au véhicule, lorsque la première variance dépasse un premier seuil prédéfini ou que la deuxième variance dépasse un deuxième seuil prédéfini,

l'unité d'acquisition (403) est configurée en outre de façon à acquérir une composante d'accélération du véhicule dans une direction verticale à l'intérieur de la première période temporelle spécifiée, lorsque l'unité de détermination (402) détermine que la distance relative est inférieure à la distance seuil,

l'unité de détermination de variance (404) est configurée en outre de façon à déterminer une troisième variance de la composante d'accélération verticale,

le système de commande de véhicule comprenant en outre :

une deuxième unité de détermination (407), configurée de façon à déterminer si la troisième variance est inférieure à un troisième seuil prédéfini,

l'unité de confirmation (405) est spécifiquement configurée de façon à déterminer qu'un accident par collision est arrivé au véhicule lorsque la première variance dépasse le premier seuil ou que la deuxième variance dépasse le deuxième seuil, et lorsque la deuxième unité de détermination (407) détermine que la troisième variance est inférieure au troisième seuil.

**11.** Le système de commande de véhicule selon la Revendication 10, comprenant en outre :

une deuxième unité de détection (408), configurée de façon à détecter une position de corps de véhicule là où l'accident par collision est arrivé,

une unité photographique (406), configurée de façon à déclencher un appareil de prise de vues correspondant à la position de corps de véhicule de façon à capturer des images, permettant ainsi à un conducteur de confirmer l'accident par collision en fonction des images capturées.

**12.** Le système de commande de véhicule selon la Revendication 10, où la première unité de détermination (402) comprend :

une sous-unité de détermination (4011), configurée de façon à déterminer si des données de distance retournées par un capteur de mesure de distance du véhicule sont égales à une limite inférieure d'une plage de mesure de distance du capteur de mesure de distance,

une sous-unité d'acquisition (4012), configurée de façon à acquérir des informations d'accélération du véhicule à l'instant courant, lorsque la sous-unité de détermination (4011) détermine que les données de distance sont la limite inférieure,

une sous-unité de détermination de déplacement (4013), configurée de façon à utiliser les informations d'accélération pour déterminer une distance de déplacement estimée du véhicule à l'intérieur d'une deuxième période temporelle spécifiée,

une sous-unité de détermination de distance (4014), configurée de façon à déterminer, en fonction des données de distance et de la distance de déplacement estimée, la distance relative entre le véhicule et l'obstacle.

**13.** Le système de commande de véhicule selon la Revendication 12, où la sous-unité de détermination de distance (4014) est configurée en outre de façon à prendre les données de distance en tant que distance relative entre le véhicule et l'obstacle lorsque la deuxième sous-unité de détermination (4011) détermine que les données de distance sont supérieures à la limite inférieure.

```
                        ┌──────────────┐
                        │    Start     │
                        └──────┬───────┘
                               │
                               ▼                              101
  ┌────────────────────────────────────────────────────┐   ╱
  │ A vehicle control system detects a relative distance │ ╱
  │        between a vehicle and an obstacle             │
  └────────────────────────┬───────────────────────────┘
                           │
                           ▼                                  102
                    The vehicle control system             ╱
              determines whether the relative distance    ╱
                 is less than a preset distance threshold    NO
                           │
                          Yes
                           ▼                                  103
  ┌────────────────────────────────────────────────────┐   ╱
  │ The vehicle control system acquires a longitudinal   │ ╱
  │ acceleration component and a lateral acceleration    │
  │ component of the vehicle within a first specified    │
  │                   time period                        │
  └────────────────────────┬───────────────────────────┘
                           │
                           ▼                                  104
  ┌────────────────────────────────────────────────────┐   ╱
  │ The vehicle control system determines a first        │ ╱
  │ variance of the longitudinal acceleration component  │
  │ and a second variance of the lateral acceleration    │
  │                   component                          │
  └────────────────────────┬───────────────────────────┘
                           │
                           ▼                                  105
  ┌────────────────────────────────────────────────────┐   ╱
  │ The vehicle control system determines a collision    │ ╱
  │ accident happens to the vehicle, when the first      │
  │ variance exceeds a preset first threshold or the     │
  │ second variance exceeds a preset second threshold    │
  └────────────────────────┬───────────────────────────┘
                           │
                           ▼
                    ┌──────────────┐
                    │ End procedure │◄─────
                    └──────────────┘
```

FIG. 1

FIG. 2

```
                           ┌─────────────┐
                           │    Start    │
                           └─────────────┘
                                  │
                                  ▼
              ╱────────────────────────────────────╲
             ╱       A vehicle control system        ╲          301
            ╱    determines whether distance data fed back   ╲
           ╱ by a distance measuring sensor of the vehicle is equal to a lower limit of ╲  ──── NO
            ╲           a distance measuring range of the                ╱
             ╲             distance measuring sensor              ╱
              ╲────────────────────────────────────╱
                                  │ Yes
                                  ▼
    ┌────────────────────────────────────────────────────────┐  302
    │ The vehicle control system acquires acceleration information of the vehicle at the │
    │ current moment, and uses the acceleration information to determine an estimated │
    │    moving distance of the vehicle within a second specified time period │
    └────────────────────────────────────────────────────────┘
                                  │
                                  ▼
    ┌────────────────────────────────────────────────────────┐  303
    │ The vehicle control system determines, according to the distance data fed back by the │
    │  distance measuring sensor and the estimated moving distance, a relative distance │
    │                    between the vehicle and the obstacle │
    └────────────────────────────────────────────────────────┘

    ┌────────────────────────────────────────────────────────┐  304
    │ The vehicle control system takes the distance data as the relative distance between the │
    │                          vehicle and the obstacle │
    └────────────────────────────────────────────────────────┘
                                  │
                                  ▼
              ╱────────────────────────────────────╲           305
             ╱  The vehicle control system determines whether the relative ╲  ──── NO
              ╲    distance is less than the preset distance threshold    ╱
               ╲────────────────────────────────────╱
                                  │ Yes
                                  ▼
    ┌────────────────────────────────────────────────────────┐  306
    │ The vehicle control system acquires the longitudinal acceleration component, the │
    │  lateral acceleration component, and an acceleration component of the vehicle in a │
    │           vertical direction within the first specified time period │
    └────────────────────────────────────────────────────────┘
                                  │
                                  ▼
    ┌────────────────────────────────────────────────────────┐  307
    │The vehicle control system determines the first variance of the longitudinal acceleration│
    │  component, the second variance of the lateral acceleration component, and a third │
    │           variance of the vertical acceleration component │
    └────────────────────────────────────────────────────────┘
                                  │
                                  ▼
              ╱────────────────────────────────────╲
             ╱          After determining            ╲          308    ┌──────────────────┐
            ╱  that the first variance exceeds the first threshold or the ╲ ──── NO ──►│ Outputting warning │
           ╱ second variance exceeds the second threshold, the vehicle control ╲       │   information    │
            ╲ system determines whether the third variance is less than ╱              └──────────────────┘
             ╲           a preset third threshold            ╱
              ╲────────────────────────────────────╱
                                  │ Yes
                                  ▼
    ┌────────────────────────────────────────────────────────┐  309
    │ The vehicle control system determines a collision accident happens to the vehicle, and │
    │    detects a vehicle body position where the collision accident happens │
    └────────────────────────────────────────────────────────┘
                                  │
                                  ▼
    ┌────────────────────────────────────────────────────────┐  310
    │  The vehicle control system triggers a camera corresponding to the vehicle body │
    │ position to capture images, thereby enabling a driver to confirm the collision accident │
    │                   according to the captured images │
    └────────────────────────────────────────────────────────┘
                                  │
                                  ▼
                           ┌─────────────┐
                           │End procedure│
                           └─────────────┘
```

FIG. 3

first detecting unit 401

first determining unit 402

acquiring unit 403

confirming unit 405

variance determining unit 404

vehicle control system

FIG. 4

first detecting unit 401

first determining unit 402

acquiring unit 403

confirming unit 405

second determining unit 407

variance determining unit 404

second detecting unit 408

photographing unit 406

vehicle control system

FIG. 5

FIG. 6

FIG. 7

**EP 3 816 004 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007088488 A1
- KR 101544421 B1